# EUROPEAN PATENT SPECIFICATION

(11) **EP 4 112 568 B1**
(45) Date of publication and mention of the grant of the patent: **10.12.2025**
(21) Application number: 22181640.8
(22) Date of filing: 28.06.2022
(51) Int. Cl.: C02F 9/00, C02F 3/26, C02F 1/78, C02F 11/02, C02F 3/12, C02F 1/20, B01D 47/00, B01D 53/78, C02F 1/66

(54) **RECOVERY OF GASEOUS FLOWS RICH IN OXYGEN AND OZONE IN A WASTE WATER TREATMENT PLANT**
RÜCKGEWINNUNG VON SAUERSTOFF- UND OZONREICHEN GASFÖRMIGEN STRÖMEN IN EINER ABWASSERREINIGUNGSANLAGE
RÉCUPÉRATION DE FLUX GAZEUX RICHES EN OXYGÈNE ET EN OZONE DANS UNE STATION D'ÉPURATION DES EAUX USÉE

(30) Priority: 29.06.2021 IT 202100017066
(43) Date of publication of application: 04.01.2023
(73) Proprietor: Societa' Italiana Acetilene & Derivati S.I.A.D. S.p.A. in breve S.I.A.D. S.p.A., 24126 Bergamo (IT)
(72) Inventor: BISSOLOTTI, Giorgio, 24126 BERGAMO (IT); PASINETTI, Eleonora, 24126 BERGAMO (IT); RADAVELLI, Pier Luigi, 24126 BERGAMO (IT); RIGAMONTI, Enrico, 24126 BERGAMO (IT)
(74) Representative: Bianchetti & Minoja with Trevisan & Cuonzo IPS SRL

(56) References cited:
- EP-A2- 2 785 652
- JP-A- S5 342 438
- JP-A- S60 216 826
- US-A- 6 086 766
- US-A1- 2012 267 318
- US-B1- 6 337 020

## Description

### Summary of the Invention

The present invention relates to a wastewater and sludge treatment plant which enables optimisation of gaseous streams, improvement in plant efficiency with particular regard to process optimisation and to the sludge production control, and to the reduction in harmful outflows through integration and recovery of oxygen- and ozone-rich gaseous streams with low energy consumption systems.

### BACKGROUND

Urban and industrial wastewater is treated in purification plants to remove the pollutants contained therein. Most of these plants comprise biological processes, where purification is carried out by biomasses, suspended or adhered, which, thanks to the presence of microorganisms and the metabolism thereof, transform complex pollutants into simple molecules that are compatible with the environment.

Purification plants consist of a series of sequential treatments that allow to reduce the concentration of water pollutants.

Different treatment plant layouts have been developed over the years, with different technological characteristics and operational advantages. The choice of the technology to be adopted depends mainly on the characteristics of the water to be purified and its hydraulic flow rate, on the requirements of the water leaving the plant and the available spaces.

By pollutants/polluting substances we mean, by way of non-limiting example, organic and inorganic compounds of natural and/or synthetic origin that can cause oxygen consumption: oils, surfactants, metals, microbial/viral load, suspended solids, sulphur compounds, dyes, greenhouse gases, micropollutants, etc.

At present, most wastewater purification plants consist of a chain of treatments comprising: primary treatments (for roughing of pollutants), secondary treatments (main section used for removal of pollutants) and tertiary treatments (refining). Water then undergoes a series of treatments along the *Water Line* that will allow to return the purified matrix to the receiving water bodies. The different treatment sections determine the production of sludge, through physical and/or chemical and/or biological processes, to form the *Sludge Line,* which in turn consists of a chain of dedicated treatments. The final destination of the sludge produced (surplus sludge), disposal or recovery, will depend mainly on its characteristics.

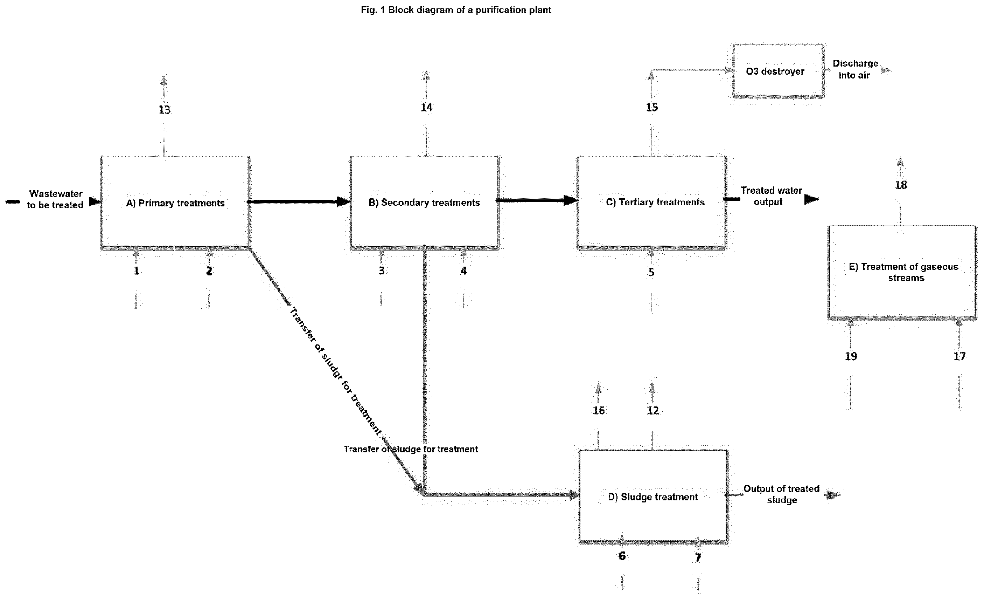

A summary of the main water and sludge treatments in wastewater purification plants, along the *Water Line* and the *Sludge Line,* is shown in Fig.1.

In short, they consist of the following stages.
- One or more primary treatments (Block A), the purpose of which is the removal of coarse materials (screening, sieving), heavy suspended solids (sand removal), floating substances (oil removal, flotation) and settleable particulate matter (clarification and sedimentation); these processes may possibly be combined and/or supported by dosing chemicals (e.g. flocculants). Primary treatments include steps to equalise the hydraulic flow rate, to homogenise the qualitative characteristics of the wastewater and to aerate, oxidise and desorb volatile organic compounds (VOCs).
- One or more secondary treatments (Block B), for the removal of finely suspended and dissolved organic matter through biological processes: these include those known as 'activated sludge' (with suspended biomass) characterised by a suspension of microorganisms in the treated water (known as mixed liquor) which, aggregated in the so-called 'activated sludge', utilise the pollutant (containing carbon, nitrogen and phosphorous as well as other micronutrients) for their own life processes, generating as main by-products water, carbon dioxide, nitrates, gaseous nitrogen and a certain amount of new activated sludge that is partly recirculated and partly has to be removed ("surplus sludge"); this treatment takes place in one or more tanks in which the microorganisms are maintained in suspension, in the presence or absence of dissolved oxygen, combined with one or more units in which the sludge flocs are separated from the treated water by gravity (secondary settler), flotation (flotators) or by filtration systems (e.g. ultrafiltration membrane plants) and largely recirculated in the aforementioned treatment tanks to maintain an adequate concentration of active biomass inside them. Suspended biomass processes also include sequential 'batch' or 'semi-batch' processes.

Other types of biological processes are those with adhered biomass in which microorganisms grow attached to a support constituting the filling material. The biological process of pollutants removal takes place according to the same principle explained for the activated sludge process and can work under aerobic and anaerobic conditions. The supports for microbial growth are made up of materials of a different nature, comprising plastics. Biofilm processes include, for example, moving bed biofilm reactor (MBBR) and fixed bed systems (e.g. percolating filters and submerged biofilters).

Usually, the oxygen required for the biological process is dissolved in the wastewater/mixed liquor/bulk liquid by blowing air **(****Fig.1****, stream 3)** with blowers and bottom diffusers or by other dedicated electromechanical equipment.
- A subsequent tertiary treatment or refinement section (block C) which has the purpose of further improving the characteristics of the water with regard to the content of specific pollutants (e.g. surfactants, chromophores and/or other organic substances not removed by the activated sludge process) and/or reducing the residual pathogenic microbial load (disinfection) before discharging in the receptor and/or further reducing the concentrations of nutrients (nitrogen and phosphorous) and/or eliminating any toxicity of the residual organic matter. The tertiary treatments comprise biological processes (adhered or suspended biomass processes) and chemical processes such as for example oxidation with ozone, with Fenton reagent (hydrogen peroxide solution with bivalent iron in acid conditions by sulphuric acid) or advanced chemical oxidation processes (AOP) such as for example with O₃/H₂O₂, H₂O₂/UV, O₃/catalysers, O₂/catalysers or combined processes. The treatment with ozone (produced on-site from air or pure oxygen) is carried out in a closed reactor and the off-gas 15 is sent to a residual ozone destroyer, before discharge to the atmosphere.
- A chain of treatments on surplus sludge (Block D) with the aim of reducing the volume of the solids produced by water removal (thickening and dewatering steps) and stabilising them to reduce the putrescibility and the pathogenic microbial load. Biological processes (aerobic or anaerobic digestion) as opposed to chemical processes (e.g. lime conditioning) are predominantly applied for stabilisation. For dewatering, following the thickening or densifying phase, belt presses, filter presses or centrifuges are used depending on the sludge characteristics, drying beds or thermal drying using heat. In the dewatering phases, chemicals (polyelectrolytes or similar) can be used in order to favour the release of water from the solid matrix. The liquid phase recovered from the different treatment steps is usually recirculated to the biological process of the secondary treatment, for its treatment. The treatments must therefore minimize the volume of surplus sludge, as well as guarantee its quality characteristics for the purpose of disposal/recovery, to limit the cost of disposal and its overall environmental impact.

Examples of excess sludge treatments are aerobic digestion or stabilisation, under mesophilic or thermophilic conditions, which involves the mixing and oxygenation of the excess sludge inside one or more treatment tanks adequately sized, determining as main by-products CO₂, H₂O, heat and digested sludge, and anaerobic digestion, under mesophilic or thermophilic conditions, which generates as main by-products H₂O, a gaseous stream containing mainly CO₂ and CH₄ ("biogas") and digested sludge ("digestate").

Both for aerobic digestion and for anaerobic digestion, ozone dosages can be provided in order to promote sludge reduction processes and the improvement of biogas quality for the anaerobic process.

An integral part of the treatment is the wastewater and/or mixed liquor lifting equipment (e.g. augers, pumps, 'air lift' type systems) used for sending to the next treatment stages and for the necessary recirculation within certain process stages.

In their normal functioning, traditional wastewater purification plants generate a series of negative impacts on the surrounding environment, linked both to the residual concentration of pollutants/micropollutants and bacteria/viruses contained in the water outflows and in the disposed sludge, and to the handling of the wastewater and sludge, and to the introduction of large quantities of atmospheric air in order to maintain sufficient values of dissolved oxygen in certain treatment phases (activated sludge stage, aerobic sludge stabilisation, etc.). In particular, undesirable substances are released into the atmosphere, such as malodorous substances and/or volatile organic compounds (already present in the wastewater fed to the plant or generated during treatment) and/or greenhouse gases and small droplets of sewage and aerosols containing organic and inorganic pollutants, bacteria, viruses, solid particles that could adhere to particulate matter (PM10 in the various particle size fractions) and be transported remotely.

These undesirable substances spread in the environment, depending on the geographical location of the plant and on the environmental conditions (light, temperature, humidity, wind), and can generate a negative impact up to hundreds or thousands of metres from the emission point.

In some plants there are treatment systems (Block E) for the gaseous emissions deriving from some of the treatment sections described above (e.g. **12** and **13).**

The use of oxygen and ozone in the various stages of the purification processes described above has already been proposed. The use of ozone for the reduction of excess sludge/foam control is described for example in EP 1554222, FR 2916754, EP 1905743, EP 1976804 and EP 2354096.

EP 1554222 provides for the use of an O₃ and O₂ mixture (2.5 - 300 mgO₃/L) directly in the oxidation tank through a pump-venturi system or a turbine that sucks the O₃/O₂ flow from any source that can produce it and emulsifies it with the sludge directly in the oxidation tank. The patent specifies that systems with a high oxygen transfer rate are advantageously used, i.e. high efficiency and, therefore, with a relatively high energy demand. There is no mention of the possibility of recovering the undissolved oxygen or ozone. FR 2916754 provides for the feeding of ozone directly into the biological tank, which is not necessarily closed, keeping the reactor pH in a range of 5.5 - 7 units.

EP 1905743 provides for the contact between the gaseous stream of O₃ and O₂ with the sludge in a reactor wherein sludge is sent from the oxidation tank (or from the sludge recirculation, also pre-thickened or concentrated) and then sent back again to the oxidation tank or another discharge/treatment point. Recovery of the residual, undissolved gas stream is not foreseen.

EP 1976804 deals with the use of ozone for the reduction of activated sludge production or the control of foam or bulking. EP 2354096 explicitly provides for the production of O₃ from air and its batching with a microbubble contact system. Recovery of unreacted/dissolved ozone is not mentioned. The prescribed ozone batches are ≤ 50 mg/gSST product. The use of ozone for exhausted air treatment is described in EP 27194440 and IT 1392400.

EP 27194440 describes the use of ozone for the partial oxidation of contaminants in streams resulting, mainly, from combustion and chemical processes.

It refers in particular to the removal of NOₓ (also to sulphur oxides, acid gases, particulate matter and mercury) and provides for the division of the polluted stream into two or more streams of which at least one is treated with ozone and one is not. The oxidised stream is then sent to a scrubber for removal of the oxidised contaminants.

IT 1392400 generically relates to a scrubber for the treatment of gaseous streams and describes purification of aspirated gases which are treated and fully reintroduced into the room (working environment) after impurities removal; ozone is produced from air and is used to ozonize the water sent to the scrubber; insoluble substances are formed, which are precipitated in the scrubber and removed. The recovery of exhaust oxygen from the ozonation vent is described in WO 2013000115, US 4132637 and EP 2785652.

WO 2013000115 provides for the use of ozone generated in a concentration comprised within the range 8-12% v/v; off-gas passes through a destroyer before its reuse in a biological oxidation tank working with pure O₂. No closure of the tank is specified and no further undissolved O₂ recovery in oxidation is specified.

US 4132637 provides for the recovery of the off-gas from the tertiary (disinfection) after dehumidification and purification with recover of oxygen quality similar to the original, for its reuse in the ozone generator and/or in the biological oxidation tank.

EP 2785652 provides for the control of the oxygen content in the off-gas (optionally with O₂ make-up and/or by varying the flow rate to the O₃ generator) keeping it high; off-gas can be directed in different points in the plant (including pre-aeration, anaerobic, etc.). There is no provision for recovering the mixture containing O₃ and its integration with O₃. The use of pure oxygen for aerobic digestion is described in IT CR20120023A1, which describes a process for the formation of CaCO₃ crystals (with lime addiction, the CO₂ is from a bacterial reaction) to which the biomass adheres. Oxygen is used to maintain the temperature high and accelerate biological reactions. The possible use of ozone or other oxidants (e.g. H₂O₂) to improve the quality of the outlet water is mentioned; no gas streams recovery is provided.

JP S 5342438 relates to a wastewater treatment method in which gas streams from primary (tank 2), secondary (tank 4 and clarifier 6) and tertiary (contact tank 10) treatments are treated in a catalytic unit (19). Ozone gas produced in unit 11 is provided to the contact tank 10 for the tertiary treatment. The ozone is not reused in other sections of the plant and is therefore degraded in a special unit. None of the cited documents contains teachings concerning the entire biological purification process and, in particular, teachings on how to optimise the gaseous streams which are currently dispersed in the air whereas they could be recovered and usefully reused, thus also avoiding the formation of aerosols.

### Description of the invention

The object of the present invention, as set out in the appended set of claims, is the use and recovery of oxygen/ozone streams in a WWTP (Waste Water Treatment Plant) both on water and sludge lines and on gaseous emissions. The focus of the proposed idea is the integrated recovery of exhausted, or partially exhausted, gaseous streams from the different treatments/processes in order to reduce emissions or improve the efficiency of the other stages.

Using this approach, it is possible to:
- avoid the use of the residual ozone removal stage on ozone-rich streams;
- increase the efficiency of the biological reactor;
- reduce the amount of surplus sludge to be removed;
- reduce the amount of aerosols released into the atmosphere as GHG (Green House Gas), VOC (Volatile Organic Carbon), PM (Particulate Matter) and bioaerosols;
- increase the quantity of biogas and its quality in anaerobic digestion;
- enable the application of low efficiency oxygen diffusion systems in the biological reactor and thus reduce energy consumption thereof.

The proposed objectives are pursued through the application of oxygenation and ozonation systems along the entire treatment chains of water, sludge and gaseous streams lines. Ozone is a resource in all treatment sections, and therefore is not destroyed using a catalyst or different methods, as currently in use. In some configurations, the recovery of the rich ozone stream is integrated with more ozone if necessary to achieve the desired objectives. The reuse of the ozone-rich gas stream finds application in certain stages of WWTPs where, until now, it has not been used as the first stages of treatment or primary sedimentation.

Different plant configurations are proposed for the above objects.

It has now been found that the problems of the prior art can be overcome by using appropriate recirculation of streams of oxygen and of oxygen and ozone. The invention provides in one of its first aspects a water and sludge treatment plant comprising:
- A block A for the arrival and primary treatments of sewage, and its optional lifting;
- A secondary treatment block B for aerobic and/or anaerobic biological removal of organic and inorganic compounds;
- A tertiary treatment block C for reducing the content of specific pollutants and for reducing the residual bacterial load by means of biological and/or chemical/physical processes;
- A block D for the treatment of surplus sludge coming from blocks A, B and C;
- A block E for the treatment of gaseous emissions coming from blocks A and D,
characterized in that it comprises a unit F for the production of oxygen and ozone streams, which are sent to one or more closed units of block E and of blocks A-D and recirculated from the latter and subsequently purified in block E before being released into the environment without production of aerosols, and further characterised by the absence of ozone destroying unit from the output stream from the stage in which ozone has been used, wherein:
- the recovered oxygen and ozone streams (14, 15, 16) emitted by blocks B, C, D, as exhausted or partially exhausted gaseous streams, are recirculated in other blocks of the plant;
- the oxygen and ozone stream (10, 11) from unit F is sent to block C and from there recirculated to one or more of blocks A, B, D and E;
- the oxygen and ozone stream (10, 11) from unit F is sent to block B and from there recirculated to block A and/or to block D or to block E;
- the oxygen and ozone stream (10, 11) from unit F is sent to block D and from there is recirculated to block A or to block B or to block E.

A second aspect of the present disclosure relates to a process for treating urban and industrial wastewater comprising at least one stage of treatment with ozone and oxygen in a closed tank characterised in that residual ozone or oxygen is recovered from said stage by recycling it to a different treatment stage.

The plant of the invention has the following advantages:
- economic in that the recirculated gas streams are rich in oxygen and ozone, decreasing in this way the use of oxygen and ozone generated specifically to support biological processes or to achieve chemical processes;
- environmental in that all sources of atmospheric emissions are captured, which are made up of aerosols, of substances present in the wastewater and which are released into the air;
- health of plant operatives in that it is known that the concentration of harmful aerosols is highest where the primary (Block A) and secondary (Block B) process treatment stages are present.

Moreover, in none of the patents examined there are references on the energy savings search, which is instead possible according to the teachings of this invention, which provides for the use of low-efficiency systems for the dissolving of oxygen, or of oxygen and ozone, precisely because the outflows from the various stages are recirculated; this generates a consequent overall energy saving.

### Detailed description of the invention

Figure 1 shows a block diagram of a conventional wastewater purification plant.

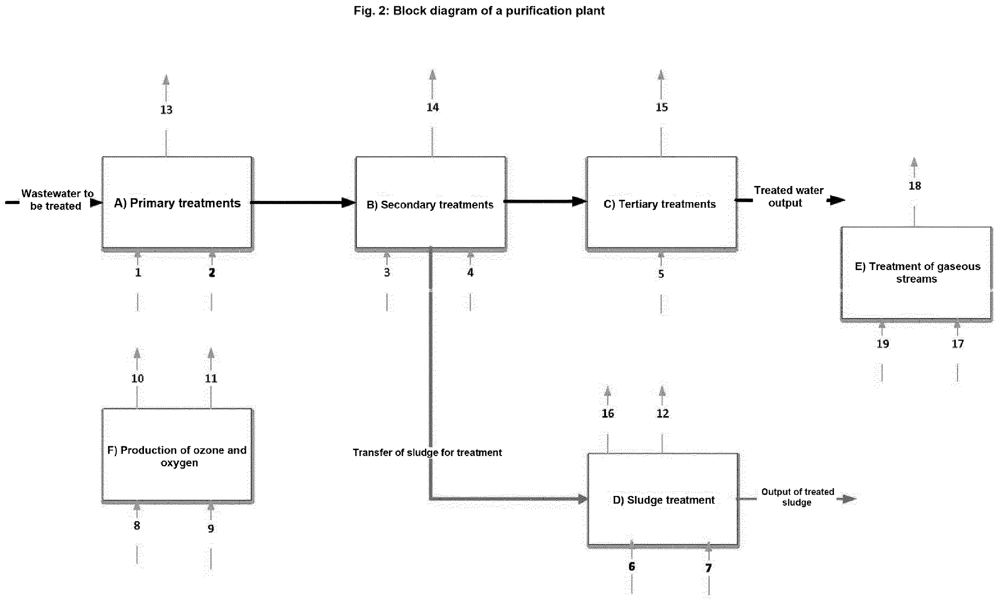

Figure 2 shows a block diagram of a purification plant that uses O₂ **(10)** and/or a mixture of O₂ and O₃ **(11)** coming from a production compartment **[block F].**

The application of oxygen and ozone in the individual compartments of the various treatment 'blocks' ([A-primary treatments], [B-secondary treatments], [C-tertiary treatments], [D-sludge treatments], [E-gas stream treatment]) is, as seen, already known. For example, stream **10** is used to feed stream **3** or stream **6** and stream **11** is used to feed stream **5** and sometimes stream **4** of stream **7.**

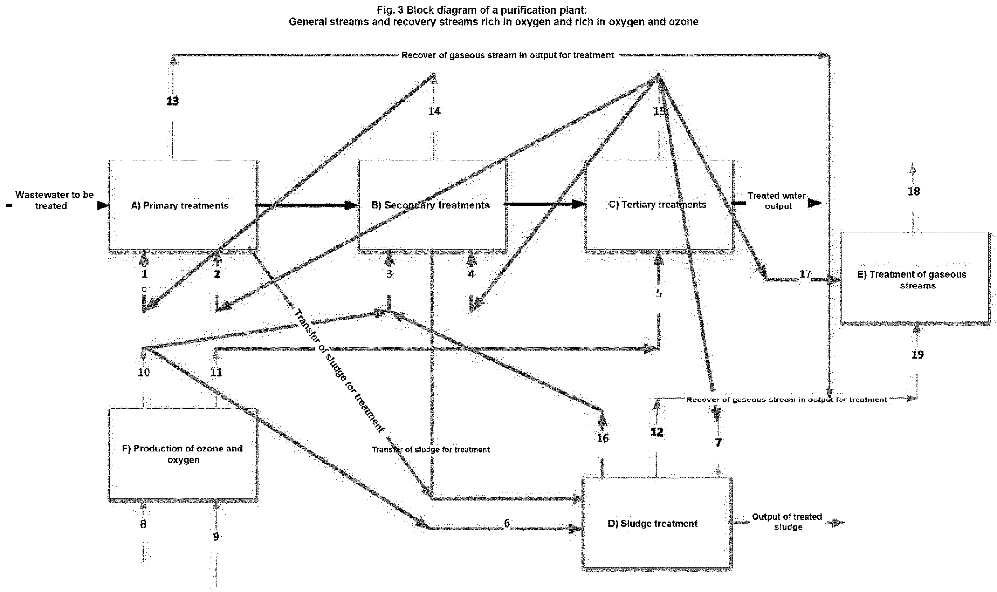

What has not been explored in depth in the prior art is the integrated vision of the streams and their profitable possibility of reuse, which also leads to specific advantages on the performance of the machines used to handle them. From the analysis of the functioning of a purification plant, as represented above, it is known that gaseous streams containing O₂ **(14, 16)** and/or O₂ and O₃ **(15),** containing the undissolved or not reacted gases, exit from the treatment stages and are transferred into the air; Instead, it appears advantageous to proceed with their reuse in other points of the purification plant as shown in **Fig.3****,** which shows the overall view of the possible reuses of these streams, which are defined and specified in greater detail here below.

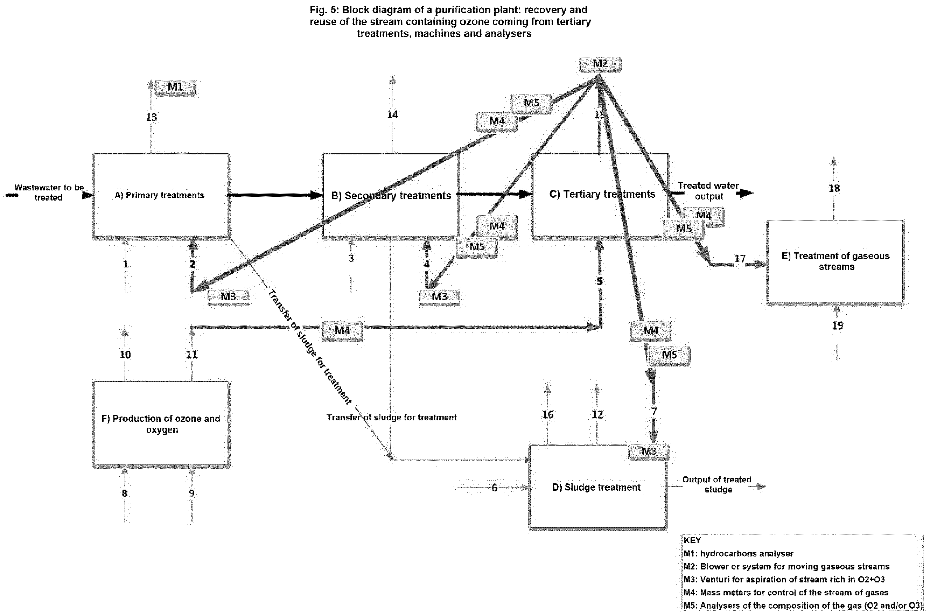

For the capture of the gaseous streams emitted by the plants or by the reactors, currently destined to be discharged directly into the air, it is necessary to cover the tanks and suitable means for capture and handling **(M2, M3** - **ref.** **Figs. 5****,****8****,****11****).** In this way it is possible to carry out the recirculation of streams still containing O₂ or O₂ and O₃ into stages where they can be usefully reused.

In this way, it is possible to obtain the following advantages:
- economic, such as the recovery of O₂ and O₃ (which would otherwise have to be totally supplied by special machines, e.g. by Block F);
- environmental, in that all sources of atmospheric emissions are captured (which consist of aerosols, substances present in the wastewater that are released into the air and which are a source of pollution and odours);
- health of plant operatives, in that it is known that the concentration of harmful aerosols is highest where process treatment stages are present and that these affect people's health.

**Fig.3** shows the block diagram of a purification plant with indication of the general streams and of the oxygen-rich and oxygen-rich and ozone-rich recovery streams that are the subject of the invention. Below a description of the actions that can be implemented for the individual process phases is reported.

### Actions on primary treatments [Block A]

As described above, the purification plants provide one or more primary treatments, the purpose of which is the removal of coarse materials (screening, sieving), heavy suspended solids (desanding), of floating substances (de-oiling, flotation) and of sedimentable particulate matter (clarification and sedimentation). These processes can optionally be combined and/or assisted by dosage of chemical products (e.g. flocculants) in suitable quantities. Primary treatments comprise phases for the equalisation of the hydraulic flow rate, homogenisation of the qualitative characteristics of the wastewater as well as aeration and desorption of volatile organic compounds (VOCs). These primary treatments can be provided with technological solutions and/or employ additives/chemical products also to reduce odour emission and avoid the dispersion of volatile substances and aerosols into the environment. As proven by experimental studies carried out by the authors, primary treatments are among the compartments that generate the highest aerosol pollution in the entire purification plant and it therefore appears advantageous to operate as described here below.

### Sewage arrival sump, screening, lifting, sand and oil removal

The covering thereof is provided by fixed or removable apparatuses, or the positioning in rooms designed for this purpose. Suitable ventilation systems are provided to keep the sections in question under negative pressure in order to prevent the spread of malodorous substances/aerosols and, where necessary, to guarantee microclimatic conditions suitable for the safe entry of staff involved in equipment management.

The exhausted air **13 (****Fig.3****)** leaving the compartment is sent to a wet treatment system [Block E, described in greater detail here below], with one or more stages, in which recirculating water ozone is dissolved together, where appropriate, with chemicals for pH correction. The ozone promotes the oxidation of organic, sulphur and ammonia substances, reduces the odorous load in the treated air, and promotes its disinfection before the reintroduction into the atmosphere.

The proposed plant typology also minimises the emission of particulate substances (PM10).

The covering of the arrival phases of the sewage allows to quickly detect the presence of hydrocarbons and/or solvents, and in general combustible substances, by special environmental detectors/sensors **M1 (****Fig. 5****)** and can provide early and useful indications for defining operating methods to preserve the subsequent biological treatment from toxic shocks due to them and/or explosion hazard conditions in closed treatment tanks.

### Primary settler (or primary flotation unit, or clariflocculation)

The use of ozone (stream **2)** at dosages of 0.5-2 mgO₃/l promotes a flocculating action on dissolved and/or colloidal and/or suspended organic/inorganic matter, improving separation from the water.

The addition of oxygen and/or a mixture of oxygen and ozone in different concentrations also slows down the formation of anaerobic conditions in the settler, reducing the formation of H₂S (odours) and CH₄ (greenhouse gases) and the phenomena of sludge rising, thus improving the yield of the primary compartment.

The use of oxygen instead of air minimises the formation of aerosols and the emission of volatile organic pollutants into the atmosphere.

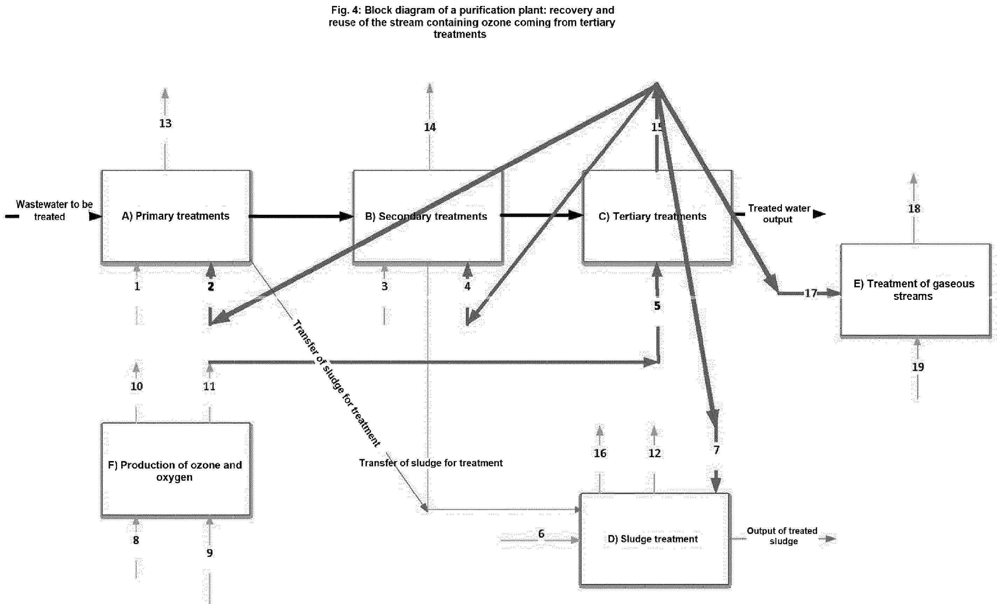

In one of the embodiments of the invention, the oxygen **(1)** or mixture containing oxygen and ozone in different concentrations **(2)** to be dissolved in the inlet wastewater derive wholly or in part from the recovery of the tertiary treatment **(15),** from the ozonolysis reactors in the water and/or sludge line, from the biological reactor **(14)** or from the aerobic digestion tank **(16),** through suitable recovery means **M2** and **M3 (****Fig. 4****,** **5****,** **7****,** **8****).** Mass flow meters **M4** and concentration analysers **M5** are installed on the recirculation streams to determine the quantity and concentration of oxygen and ozone so that the recirculation streams can optionally be supplemented with oxygen streams **10** or oxygen and ozone streams **11** from block F) also on the basis of signals from continuous meters of the treatment tanks parameters (dissolved oxygen, redox potential).

### Wastewater equalisation/homogenisation

Provision is made for covering by means of fixed or removable apparatus and treatment in block [E] of the gas outflow.

Pre-oxygenation of the wastewater may be provided in order to avoid the occurrence of septic conditions and the consequent formation of H₂S (odour) and CH₄ (greenhouse gas) and to promote the partial removal by oxidation of organic matter. The use of oxygen instead of air minimises the formation of aerosols and the emission of volatile organic pollutants into the atmosphere.

In one embodiment of the invention, the oxygen **(1)** or the mixture containing oxygen and ozone in different concentrations **(2)** to be dissolved in the inlet wastewater, derive wholly or in part from the recovery of the tertiary treatment **(15),** from the ozonolysis reactors in the water and/or sludge line, from the biological reactor **(14)** or from the aerobic digestion tank **(16),** through suitable recovery means **M2** and **M3 (****Fig. 4****,** **5****,** **7****,** **8****).**

Mass flow meters **M4** and concentration analysers **M5** are installed on the recirculation streams to determine the quantity and concentration of oxygen and ozone so that the recirculation streams can optionally be supplemented with oxygen streams **10** or oxygen and ozone streams **11** coming from block F) also depending on signals from continuous meters of the treatment tanks parameters (dissolved oxygen, redox potential).

### Pre-ozonation

Pre-ozonation of the wastewater allows, where present, to improve the biodegradability of the sewage in question. The ozone dosages required for pre-ozonation are variable and depend mainly on the characteristics of the sewage to be treated.

In one of the embodiments of the present invention, the mixture containing oxygen and ozone **(2)** fed to the pre-ozonation process is derived wholly or in part from the recovery of the tertiary treatment **15** through suitable recovery media **M2** and **M3 (****Fig. 4** **and** **5****).** Mass flow meters **M4** and concentration analysers **M5** are installed on the recirculation streams to determine the quantity and concentration of oxygen and ozone so that the recirculation streams can optionally be supplemented with oxygen streams **10** or oxygen and ozone streams **11** coming from block F) also depending on signals from continuous meters of the treatment tanks parameters (dissolved oxygen, redox potential).pH correction

Since carbon dioxide may be present in the recovery streams (in particular **14)** in higher concentrations than those present in the atmosphere, the recirculation and dissolution of this stream in the pre-treatments could, for particular types of wastewater, result in a lowering of the pH value outside of the optimal values for the proper functioning of the biological process.

The invention therefore provides for measuring systems for the control of the pH of the wastewater during the purification process in order to optionally dose substances that allow the pH to be brought back to levels comprised between 5.5 and 8.5 units (preferably between 6.5 and 8.5 units).

### Actions on secondary treatments [Block B]

As seen above, purification plants have one or more secondary treatments for the removal of finely suspended and dissolved organic matter through biological processes: these include those known as "activated sludge" (suspended biomass), with continuous processes and sequential "batch" or "semi-batch" processes, and "adhered biomass" plants in which microorganisms grow adhered to a medium to form the back material.

The innovative methods according to the invention are described here below.

### Pure oxygen biological oxidation tank

Reactors closed or covered by fixed or removable apparatus, including floating apparatus, are provided, in any case capable of allowing the capturing of the streams coming out of the reactor; the use of pure oxygen **3** instead of air allows, among other things, to:
- minimise the amount of vent gas leaving the tank, which can also be recirculated moreover and reused in other phases of the treatment;
- minimise the stripping of the substances contained in the mixed liquor and the production of aerosols (reduction of the stripping effect of an oxygen plant compared to an air plant quantified at approximately 7 to 10 times);
- have an operation that is more easily adaptable to different operating conditions with respect to an air operation system;
- treat a higher quantity of pollutant load for the same treatment volume;
- reduce the specific production of excess sludge;
- favour biological processes in the presence of low external temperatures which in an air plant would cause excessive cooling of the mixed liquor and the consequent slowing down of the bacterial purification activity.

The quantities of oxygen to be supplied per unit of biological treatment tank volume are generally comprised between 30 and 100 g O₂/m³/h. Depending on the wastewater, higher oxygen dosages are also possible.

In one of the embodiments of the invention, the oxygen **3** to be dissolved in the activated sludge tanks (or generally biological treatment) is derived wholly or in part from recovery from the tertiary treatment **15,** batched in **4,** from the ozonolysis reactors in the water line and/or sludge line and from the sludge treatment **16** via suitable recovery means **M2** and **M3 (****Figs. 4** **and** **5****).** Mass flow meters **M4** and concentration analysers **M5** are installed on the recirculation streams to determine the quantity and concentration of oxygen and ozone so that the recirculation streams can optionally be supplemented with oxygen streams **10** or oxygen and ozone streams **11** coming from block F) also depending on signals from continuous meters of the treatment tanks parameters (dissolved oxygen, redox potential).

The recovery of the oxygen-rich mixture and/or the oxygen-rich mixture with traces of ozone can advantageously be carried out with equipment **M3** also at low transfer efficiency, since the unreacted gas is, as already seen, further recovered in other treatment phases.

In this way, equipment **M3** with low energy consumption can be used, suitably aided by appropriately dimensioned mixing systems.

### Ozonolysis treatment in the 'water line'

The use of ozone in the 'water line' of activated sludge plants allows to:
- reduce the specific production of excess sludge by 20-40% (ozonolysis processes);
- improve sedimentability of the activated sludge;
- reduce/eliminate bulking and foaming phenomena;
- produce a more thickened excess sludge, optimising the digestion/dewatering processes of the sludge line;
- reduce the accumulation of micropollutants in the sludge;
- reduce the concentration of non-biodegradable or slowly biodegradable organic substances;
- reduce the presence of foams in the biological compartment;
- increase the fraction of bioavailable carbon for the denitrification compartment as source of easily biodegradable carbon;
- improve the quality of the effluent in terms of residue of suspended solids and of dissolved COD.

In one of the embodiments of the present invention, the ozone **4** used in the "water line" is derived wholly or in part from recovery from tertiary treatment **15** by suitable recovery means **M2** and **M3 (****Fig. 4** **and** **5****).** Mass flow meters **M4** and concentration analysers **M5** are installed on the recirculation streams to determine the quantity and concentration of oxygen and ozone so that the recirculation streams can optionally be supplemented with oxygen streams **10** or oxygen and ozone streams **11** coming from block F) also depending on signals from continuous meters of the treatment tanks parameters (dissolved oxygen, redox potential).

### Actions on finishing treatments [Block C]

As already pointed out, tertiary treatment or refinement aims to further improve the characteristics of the water with regard to the content of specific pollutants (e.g. surfactants, chromophore substances and/or other organic substances not removed by the activated sludge process) and/or to reduce the residual bacterial load thereof (disinfection) prior to discharge to the receptor and/or to further reduce concentrations of nutrients (nitrogen and phosphorous) and/or to increase the biodegradable nature of the residual organic matter. Tertiary treatments include processes of a biological nature (adhered or suspended biomass processes) and chemical processes such as for example: oxidation with ozone, with Fenton reagent (hydrogen peroxide solution with iron II in a sulphuric acid environment) or advanced chemical oxidation processes (AOP) such as for example with O₃/H₂O₂, H₂O₂/UV, O₃/catalysts, O₂/catalysts or combinations.

In particular, the ozonation process makes it possible to:
- reduce the bacterial and viral load;
- reduce the concentration of non-biodegradable organic substances (e.g. some surfactants);
- remove any colour;
- remove any odour;
- reduce any foams at the discharge;
- reduce the concentration of organic and inorganic micropollutants.

A further advantage, when compared with other sterilising compounds, is that any unreacted or surplus batched ozone decomposes in oxygen in a relatively short time.

Ozone batches are generally in the range of 5 - 25 mgO₃/l of treated water according to contact times of the order of 10-30 minutes.

The 'vent gas' (mainly composed of oxygen to which traces of unreacted/dissolved O₃, possible Ar, N₂, traces of CO₂ and other compounds are added) **15** can be recovered in other sections of the plant, as described above.

Recovering this gaseous stream in sections that can advantageously use 'pure' oxygen generates an economic saving. It also significantly reduces gas/air emissions to the atmosphere.

High-purity oxygen finds application in several treatment compartments (mainly the activated sludge tank and the aerobic stabilisation of the surplus sludge) and, as mentioned above, it is possible to recover the gaseous streams containing oxygen and oxygen and ozone from the ozonation processes, thereby optimising the economic management of the purification plant.

The quantity of oxygen **(14)** not dissolved in the oxidation tanks can be recovered in other compartments (inlet, pre-treatments, aerobic/anaerobic digestion).

Since a large part of the oxygen is recovered in other phases of the process and is not dispersed into the atmosphere, it is also possible to use equipment with low oxygen transfer yields characterised by limited specific energy consumption, such that the oxygenation process and full utilisation of the purchased/auto-produced oxygen is more economical overall. The reuse of stream **15** generates advantages in other plant sections and also generates the advantage of avoiding the use of the ozone destroyer: it is, in fact, no longer necessary to send said gaseous stream to the ozone removal stage in advance when it is to be discharged into the air. This allows both a simplification in the management of stream **15** and a saving in the resources required to manage the ozone destroyer (electricity, catalyst, etc.).

On the stream **15,** recirculated through suitable recovery means **M2** and **M3,** mass analysers **M4** and concentration analysers **M5** are installed to determine the quantity and concentration of oxygen and of ozone so that the recirculation streams can optionally be integrated with oxygen stream **10** or oxygen and ozone stream **11** coming from block F) also based on signals from continuous meters of the parameters in the treatment tanks (dissolved oxygen, redox potential).

### Actions on sludge treatment [Block D]

The purpose of the surplus sludge treatment chain is to reduce the volume of the solids produced through the water removal (thickening and dewatering phases) and to stabilise it in order to reduce putrescibility and pathogenic microbial load. Biological processes (aerobic or anaerobic digestion) as opposed to chemical processes (e.g. lime conditioning) are predominantly applied for stabilisation. For the purpose of dewatering, belt presses, filter presses or centrifuges are used depending on the characteristics of the sludge, drying beds or thermal drying with the use of heat. Chemicals (polyelectrolytes or the like) can be used in the dewatering phases which promote the release of water from the solid matrix. The liquid phase recovered from the different treatment phases is usually recirculated at the head of the biological process of the secondary treatment. The treatments must therefore favour the smallest possible volume of surplus sludge, as well as guaranteeing the quality characteristics thereof for disposal/recovery, in order to limit the cost of disposal and overall, its environmental impact.

### Aerobic stabilisation with pure oxygen

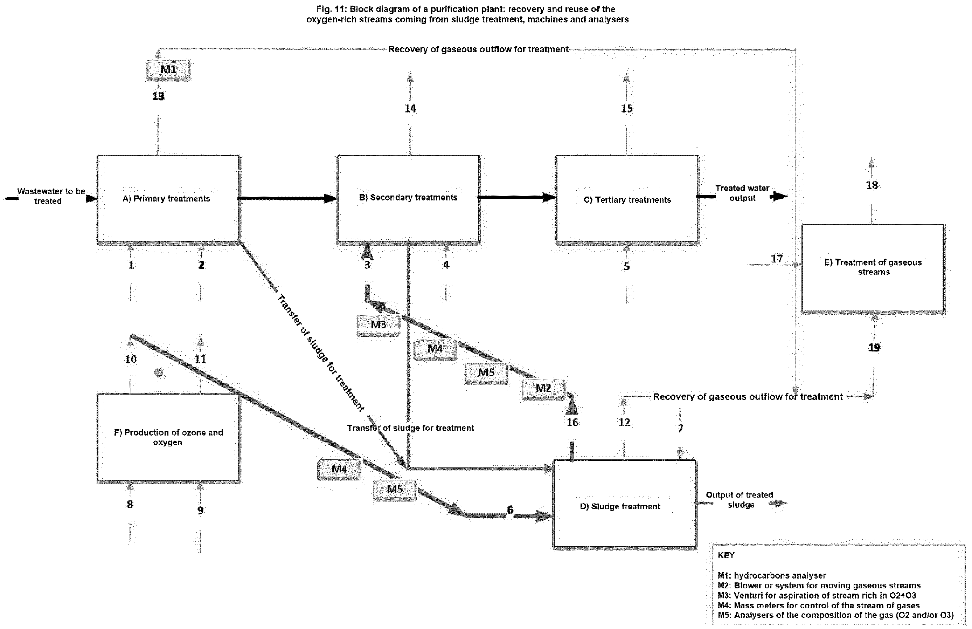

Biological reactors must be closed or covered by fixed or removable apparatuses, including floating apparatus, provided they allow the capture of outflows. Stream **6 (****Fig.3****÷11)** is made up of pure oxygen, in place of air, to:
- minimise the amount of vent gas **16** leaving the tank, which can also be recovered in other parts of the treatment plant, e.g., to feed stream **3 (****Fig. 11****);**
- minimise the stripping of substances contained in the sludge and the production of aerosols and odorous emissions;
- have an operation more easily adaptable to different operating conditions with respect to an air-operated system;

- increase the process temperature and the speed of biological reactions of stabilisation of the surplus sludge;
- improve the dewaterability of the treated sludge;
- reduce the quantity of sludge to be disposed of;
- achieve thermophilic conditions if needed with an autothermal process, without the need to insulate/heat the reactor/vessel.

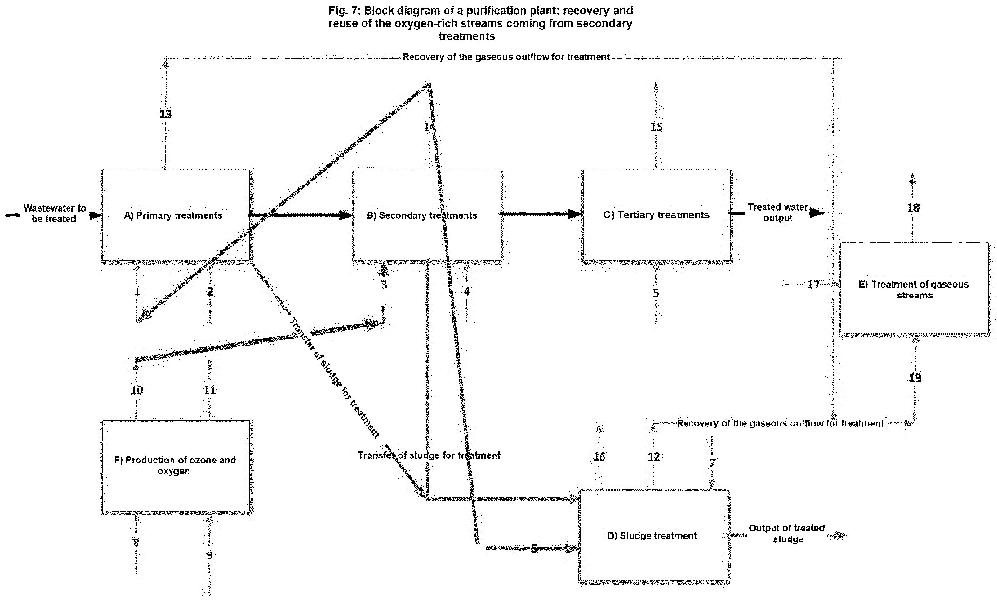

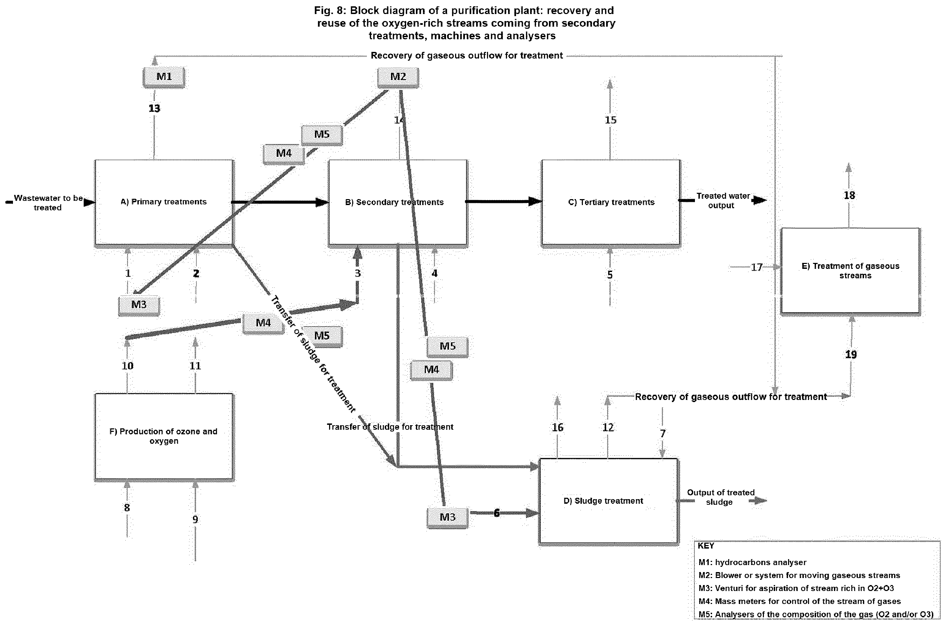

In one of the embodiments of the invention, the oxygen **6** to be dissolved in the aerobic stabilisation tanks derives wholly or in part from the recovery **14** of the secondary treatment **(****Fig. 7** **and** **8****)** through suitable recovery means **M2** and **M3.** Mass analysers **M4** and concentration analysers **M5** are installed on the recirculation streams to determine the quantity and concentration of oxygen and ozone so that the recirculation streams can optionally be integrated with the oxygen **10** or oxygen and ozone **11** streams coming from block F) also based on signals from probes and analysers of the parameters in the treatment tanks (dissolved oxygen, redox potential).

At this treatment stage, the use of the mixture of O₂ and O₃ **(7)** allows to:
- improve the removal of organic matter (volatile solids);
- reduce the formation of foams and thus make better use of the available volume;
- reduce the accumulation of micropollutants in the sludge;
- reduce the quantity of sludge to be disposed of;
- reduce the odorous potential of the sludge.

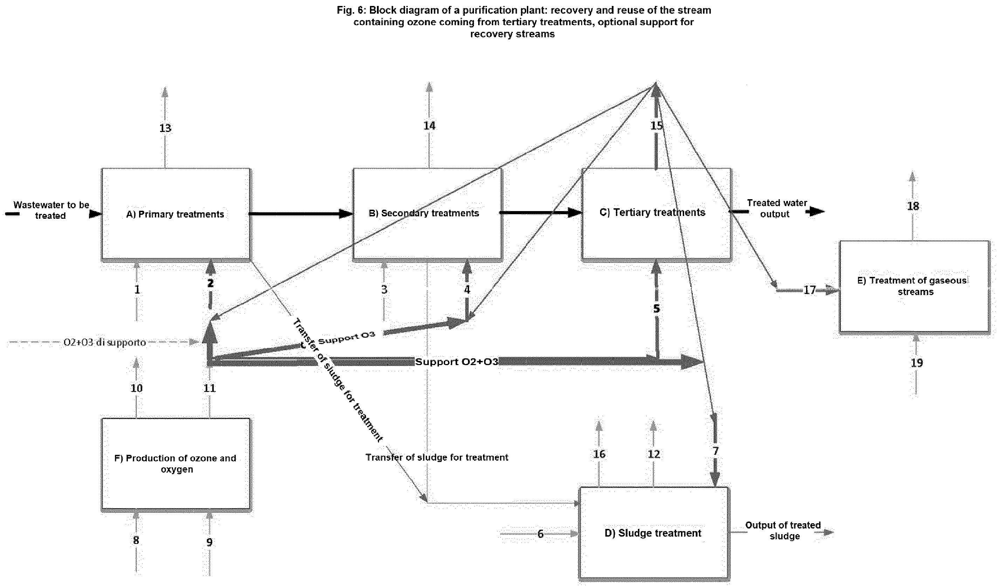

In one of the embodiments of the invention, the mixture 7, composed of O₂ and O₃ to be dissolved in the aerobic stabilisation tanks, is derived wholly or in part from the recovery **15** of the secondary treatment through suitable recovery means **M2** and **M3 (****Fig. 4** **and** **5****).** Mass analysers **M4** and concentration analysers **M5** are installed on the recirculation stream to determine the quantity and concentration of oxygen and of ozone so that the recirculation flows can optionally be integrated with the oxygen **10** or oxygen and ozone streams **11** coming from block F, **Fig. 6****,** also based on signals coming from probes and analysers of the parameters in the treatment tanks (dissolved oxygen, redox potential).

The feeding of streams **6** and **7** can advantageously be carried out in block D) even with equipment with low transfer efficiency, since the unreacted gas **16** is, as already seen, recovered in other treatment steps.

Therefore, low energy consumption apparatuses can be used, suitably aided by appropriately sized mixing systems.

### Anaerobic stabilisation

The use of ozone in the anaerobic digestion/stabilisation process (treatment of incoming sludge and/or sludge recirculated from the anaerobic digester and/or recirculated sludge from subsequent thickening treatments) makes it possible to:
- improve the removal of organic matter (volatile solids);
- reduce the formation of foams and thus make better use of the available volume;
- reduce the accumulation of micropollutants in the sludge;
- reduce the possible accumulation of toxic/inhibiting substances for the anaerobic biological process;
- reduce the amount of sludge to be disposed of according to values of at least 20%;
- increase the biogas production in the anaerobic digestion compartment by values between 15 to 100% depending on the ozone batching and the application method;
- improve the quality of the biogas produced, reducing the concentration of H₂S in the biogas;
- improve the quality of the biogas produced, with a view to upgrading to biomethane;
- improve the organoleptic characteristics of the sludge in output from digestion (odour);
- improve/maintain good dewaterability characteristics of the digestate sludge.

In one of the embodiments of the invention, the mixture **7,** composed of O₂ and O₃ to be dissolved in the anaerobic stabilisation tanks, is derived totally or in part from the recovery **15** of the secondary treatment through suitable recovery means **M2** and **M3 (****Fig. 4** **and** **5****).** Mass **M4** and concentration analysers **M5** are installed on the recirculation stream to determine the quantity and concentration of oxygen and ozone so that the recirculation flows can optionally be integrated with streams of oxygen **10** or oxygen and ozone **11** coming from block F, **Fig. 6****,** also based on signals coming from probes and analysers in the treatment tanks (dissolved oxygen, redox potential).

The feeding of streams **6** and **7** can advantageously be carried out in block D with equipment even with low transfer efficiency, in that the unreacted gas **16** is, as already seen, recovered in other treatment phases.

Therefore, low energy consumption apparatuses can be used, suitably aided by appropriately dimensioned mixing systems.

Prior to feeding and/or recirculation of the ozone-treated sludge in the anaerobic digester, it is necessary to separate the portion of undissolved oxygen. This quantity of O₂ **16** can be recovered in the plant like described in the previous points.

The use of oxygen in low dosages in the anaerobic digestion/stabilisation process (anaerobic digester recirculation sludge) makes it possible to:
- reduce/eliminate the concentration of H₂S in the biogas produced;
- improve the biogas quality, with a view to upgrade to biomethane;
- improve the treated sludge quality, optimising anaerobic digestion processes and increasing the production of biogas produced by the digestion compartment.

In one of the embodiments of the invention, the oxygen used can be derived from the recovery of vent gas of other sections of the plant as previously described.

### Dewatering and dewatered sludge storage room

Positioning thereof is provided in rooms designed for the purpose. Suitable ventilation systems are provided to keep the rooms under negative pressure to prevent the spread of malodorous substances/aerosols and to guarantee microclimatic conditions suitable for the safe entry of equipment management personnel.

Exhausted air **12** leaving the compartment is sent to a gaseous streams treatment system [Block E].

### Actions on gaseous streams treatment [Block E]

The gaseous emissions coming from blocks [A], [B], [C] and [D] are sent to a wet treatment system (scrubber) with one or more stages, in whose recirculating water ozone is dissolved together with possibly chemical substances for pH correction. The ozone promotes the oxidation of organic, sulphur and ammonia substances, reduces the odorous load in the treated air and promotes its disinfection prior to re-entry into the atmosphere.

The proposed plant typology also minimises the emission of particulate substances.

The quantities of ozone to be batched are generally comprised between 10 and 40 mgO₃/m³ of air to be treated.

In one of the embodiments of the invention, the mixture of oxygen and ozone **17** required for operation of the scrubber is derived wholly or in part from the recovery of the tertiary treatment **15,** through suitable recovery means **M2 (****Fig. 4** **and** **5****).** Mass **M4** and concentration analysers **M5** are installed on the recirculation stream to determine the quantity and concentration of oxygen and of ozone so that the recirculation streams can optionally be integrated with oxygen streams **10** or oxygen and ozone streams **11** coming from block F, also based on signals from probes and analysers in the treatment tanks (dissolved oxygen, redox potential).

### Oxygen and ozone production (block F)

Ozone can be produced from air or from an oxygen-rich stream.

In the present invention the mixture of oxygen and ozone 11 is generated on-site from an oxygen-rich gaseous stream 9 (from a self-generator with an O₂ concentration ≥ 90%, gas pipeline, liquid oxygen storage tank or from cylinders/packages of cylinders). The ozone generator converts a part of the oxygen (generally 6 - 14% in weight) into ozone, the remaining percentage being mainly composed of oxygen and traces of nitrogen and argon if present in the initial gas.

The use of high-purity oxygen **10** instead of air to produce ozone is advantageous because it allows to:
- use smaller devices for the same production;
- improve the ozone specific production efficiency (kWh absorbed/kgO₃ produced);
- produce a more concentrated stream of ozone and consequently be able to reduce the energy required for O₃ delivers and reduce the flow rate of vent gas leaving the treatment;
- limit air pre-treatments (dedusting, dehumidification, hydrocarbon removal, etc.).

The use of an oxygen **10** produced on-site (from atmospheric air **8),** with an O₂ concentration >90% and the remaining N₂ and Ar percentage, allows equipment operation to be further improved. Conversely, oxygen can come from the stream **9,** consisting of high-purity oxygen from cryogenic or gas pipeline tanks.

The ozone is used in the different plant sections, with the advantages already seen. Ozonation treatments in block C) generate a residual gaseous vent 15 rich in O₂ ("exhausted oxygen") and traces of unreacted/dissolved O₃ that can be reused in other phases of the purification process as already described.

Recovering this gaseous stream in compartments that can advantageously utilise oxygen generates an economic saving. It also significantly reduces gas/air emissions to the atmosphere.

High-purity oxygen, i.e., with purity higher than 90%, is applied in several treatment compartments (mainly the activated sludge tank in Block B and the aerobic stabilisation of the surplus sludge in Block D) and, as mentioned above, it can be recovered from several streams that would otherwise be discharged into the air, taking with them harmful substances, odours, or creating aerosols.

The amount of oxygen not dissolved in the oxidation (Block B) or sludge treatment (Block D) tanks forms part of streams **14** and **16** and can be recovered in other compartments (primary treatments A, aerobic/anaerobic digestion).

Since a large part of the oxygen is recovered in other phases of the process and not dispersed into the atmosphere, it is possible to also use dissolution equipment to insufflate the oxygen of streams **3, 6,** using systems with low oxygen transfer yields characterised by limited specific energy consumption, allowing to make the process of oxygenation and of full utilisation of the oxygen stream **10** more cost-effective overall.

The quantities of residual oxygen resulting from the ozonation processes, stream **15** can satisfy a large part of the plant's general O₂ requirement, improving the economic aspect of process management.

The recovered oxygen can then be reused in the treatment plants, reducing the consumption of oxygen **10** coming from block F. In the plants initially designed to operate with air, the use of stream **10** can be utilised to upgrade the plant itself and/or to reduce the energy consumption associated with air insufflation and/or to reduce atmospheric emissions deriving from the treatment tanks. This leads to beneficial and proper integrated management of the purification process.

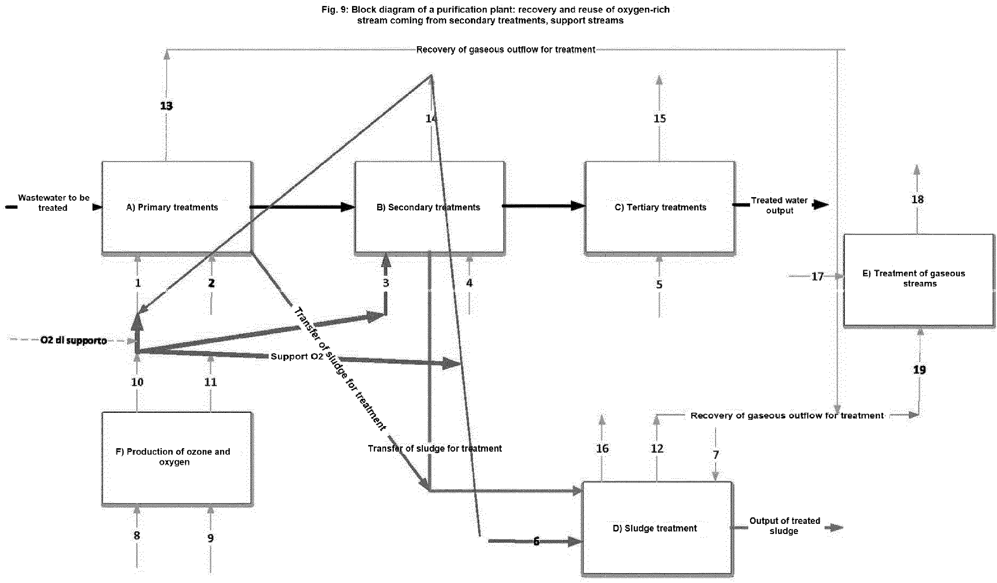

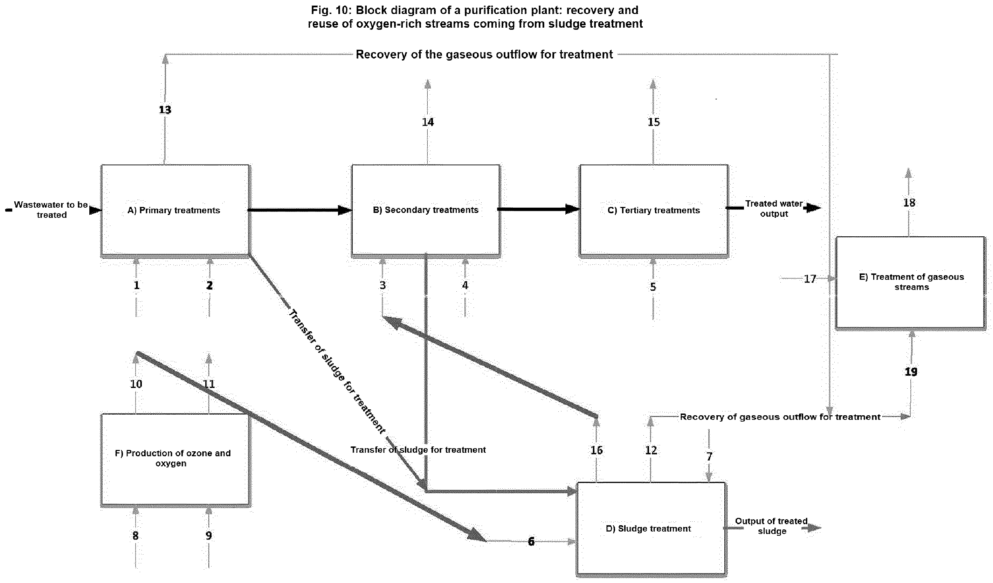

Figures 7, 8, 9, 10, 11 show the streams of oxygen and ozone that go directly from block F to the utilities in the reactors or treatment stages and, the streams which, starting from block F, are used to integrate the streams recovered from the reactors.

The reuse of the streams coming out of the blocks thus allows efficient and economical management of the plant, the operation of which requires only a few precautions:
- carbon dioxide is also present in the recirculated flows and consequently the pH of the wastewater or sludge may drop and fall outside the optimal range. Wastewater and sludge usually have sufficient buffering capacity and no intervention is required to maintain this parameter within the desired range. For some wastewater, however, it may be necessary to use chemicals in order to restore the optimum pH value in the range of 5.5 to 8.5 units;
- the use of oxygen in closed reactors can cause hazardous atmospheres, in that the possible presence in gaseous phase of combustible substances originally contained in wastewater entering the plant. This issue is known and can be overcome using combustible substance detectors to be placed on the streams that cause this risk, in particular the streams from stage A) of primary treatments and stage B) of secondary treatments.

## Claims

1. Water and sludge treatment plant comprising
- a block A for incoming sewage, with primary treatments and optional lifting;
- a secondary treatment block B for aerobic and/or anaerobic biological removal of organic and inorganic compounds;
- a tertiary treatment block C for reducing the content of specific pollutants and for reducing the residual bacterial load by biological and/or chemical/physical processes;
- a block D for treating surplus sludge coming from blocks A, B and C;
- a block E for treating gaseous emissions from blocks A and D;
**characterised in that** it comprises a unit F for the production of oxygen and ozone streams (10, 11) which are sent to one or more closed units of block E and of blocks A-D and recirculated from the latter and subsequently purified in block E before being released into the environment without production of aerosols, and further **characterised by** the absence of ozone destroying unit from the output stream from the stage in which ozone has been used,
**wherein:**
- the recovered oxygen and ozone streams (14, 15, 16) emitted by blocks B, C, D, as exhausted or partially exhausted gasous streams, are recirculated in other blocks of the plant;
- the oxygen and ozone stream (10, 11) from unit F is sent to block C and from there recirculated to one or more of blocks A, B, D and E;
- the oxygen and ozone stream (10, 11) from unit F is sent to block B and from there recirculated to block A and/or to block D or to block E;
- the oxygen and ozone stream (10, 11) from unit F is sent to block D and from there is recirculated to block A or to block B or to block E.

2. Plant according to claim 1, wherein the oxygen and ozone streams (14, 15 ,16) in output from blocks B, C and D are integrated, according to measurements of analysers (M5) placed on the receiving processes and streams, with the oxygen and ozone stream (10, 11) coming from unit F.

3. Plant according to claims 1 or 2, wherein a combustible substances analyser (M1) is provided among the flow meters (M4) to prevent the formation of potentially explosive atmospheres.

## Patentansprüche

1. Wasser- und Schlammbehandlungsanlage, umfassend
- einen Block A für eingehendes Abwasser mit Vorbehandlung und optionaler Hebung;
- einen Sekundärbehandlungsblock B zur aeroben und/oder anaeroben biologischen Entfernung organischer und anorganischer Verbindungen;
- einen Tertiärbehandlungsblock C zur Verringerung des Gehalts an bestimmten Schadstoffen und zur Verringerung der Restbakterienbelastung durch biologische und/oder chemisch-physikalische Verfahren;
- einen Block D zur Behandlung von überschüssigem Schlamm aus den Blöcken A, B und C;
- einen Block E zur Behandlung gasförmiger Emissionen aus den Blöcken A und D;
**dadurch gekennzeichnet, dass** sie eine Einheit F zur Erzeugung von Sauerstoff- und Ozonströmen (10, 11) umfasst, die zu einer oder mehreren geschlossenen Einheiten des Blocks E und der Blöcke A-D geleitet und von diesen zurückgeführt und anschließend im Block E gereinigt werden, bevor sie ohne Erzeugung von Aerosolen in die Umwelt abgegeben werden, und ferner **dadurch gekennzeichnet, dass** keine Ozonzerstörungseinheit aus dem Ausgangsstrom aus der Stufe vorhanden ist, in der Ozon verwendet wurde,
**wobei:**
- die von den Blöcken B, C, D als Abgas oder teilweise als Abgas ausgestoßenen zurückgewonnenen Sauerstoff- und Ozonströme (14, 15, 16) in anderen Blöcken der Anlage zurückgeführt werden;
- der Sauerstoff- und Ozonstrom (10, 11) aus Einheit F zu Block C geleitet und von dort zu einem oder mehreren der Blöcke A, B, D und E zurückgeführt wird;
- der Sauerstoff- und Ozonstrom (10, 11) aus Einheit F zu Block B geleitet und von dort zu Block A und/oder zu Block D oder zu Block E zurückgeführt wird;
- der Sauerstoff- und Ozonstrom (10, 11) aus Einheit F zu Block D geleitet und von dort zu Block A oder zu Block B oder zu Block E zurückgeführt wird.

2. Anlage gemäß Anspruch 1, wobei die Sauerstoff- und Ozonströme (14, 15, 16) am Ausgang der Blöcke B, C und D gemäß den Messungen der an den empfangenden Prozessen und Strömen angebrachten Analysegeräte (M5) mit dem Sauerstoff- und Ozonstrom (10, 11) aus der Einheit F integriert werden.

3. Anlage gemäß Anspruch 1 oder 2, wobei zwischen den Durchflussmessern (M4) ein Analysegerät für brennbare Stoffe (M1) vorgesehen ist, um die Bildung explosionsfähiger Atmosphären zu verhindern.

## Revendications

1. Installation de traitement des eaux et des boues comprenant :
- un bloc A pour les eaux usées entrantes, avec traitements primaires et relevage optionnel ;
- un bloc B de traitement secondaire pour l'élimination biologique aérobie et/ou anaérobie de composés organiques et inorganiques ;
- un bloc C de traitement tertiaire pour la réduction de la teneur en polluants spécifiques et pour la réduction de la charge bactérienne résiduelle par des procédés biologiques et/ou physico-chimiques ;
- un bloc D pour le traitement des boues excédentaires provenant des blocs A, B et C ;
- un bloc E pour le traitement des émissions gazeuses des blocs A et D ;
**caractérisée en ce qu'**elle comprend une unité F pour la production de flux d'oxygène et d'ozone (10, 11) qui sont envoyés vers une ou plusieurs unités fermées du bloc E et des blocs A à D, et remis en circulation depuis ces derniers, puis purifiés dans le bloc E avant d'être rejetés dans l'environnement sans production d'aérosols, et en outre **caractérisée par** l'absence d'unité de destruction d'ozone du flux de sortie issu de l'étape à laquelle l'ozone a été utilisé, dans laquelle :
- les flux d'oxygène et d'ozone récupérés (14, 15, 16) émis par les blocs B, C et D, sous forme de flux gazeux épuisés ou partiellement épuisés, sont remis en circulation dans d'autres blocs de l'installation ;
- le flux d'oxygène et d'ozone (10, 11) provenant de l'unité F est envoyé vers le bloc C, et de là remis en circulation vers un ou plusieurs des blocs A, B, D et E ;
- le flux d'oxygène et d'ozone (10, 11) provenant de l'unité F est envoyé au bloc B, et de là remis en circulation vers le bloc A et/ou vers le bloc D ou vers le bloc E ;
- le flux d'oxygène et d'ozone (10, 11) provenant de l'unité F est envoyé au bloc D, et de là est remis en circulation vers le bloc A ou vers le bloc B ou vers le bloc E.

2. Installation selon la revendication 1, dans laquelle les flux d'oxygène et d'ozone (14, 15, 16) en sortie des blocs B, C et D sont intégrés, selon les mesures des analyseurs (M5) placés sur les processus récepteurs et les flux, avec le flux d'oxygène et d'ozone (10, 11) provenant de l'unité F.

3. Installation selon les revendications 1 ou 2, dans laquelle un analyseur de substances combustibles (M1) est installé parmi les débitmètres (M4) afin d'empêcher la formation d'atmosphères potentiellement explosives.
